# EUROPÄISCHE PATENTSCHRIFT

(11) **EP 1 043 207 B1**
(45) Veröffentlichungstag und Bekanntmachung des Hinweises auf die Patenterteilung: **25.02.2004**
(21) Anmeldenummer: 00106656.2
(22) Anmeldetag: 29.03.2000
(51) Int. Cl.: B61G 5/10, H02G 11/00, B60D 1/62

(54) **Einrichtung zum Überführen von Steuerleitungen zwischen zwei miteinander verbundenen Wagen eines mehrteiligen Zuges, insbesondere eines Gliederzuges**
Device for transferring control lines between two coupled wagons of a multiple-wagon train, especially of an articulated train
Dispositif permettant de transférer des conduites de commande entre deux wagons reliés l'un à l'autre d'un train à plusieurs wagons, notamment d'un train articulé

(30) Priorität: 08.04.1999 DE 19915748
(43) Veröffentlichungstag der Anmeldung: 11.10.2000
(73) Patentinhaber: ALSTOM LHB GmbH, 38239 Salzgitter (DE)
(72) Erfinder: Dischinger, Andreas, 38122 Braunschweig (DE); Richter, Michael, Ing., 38268 Lengede (DE)

(56) Entgegenhaltungen:
- DE-B- 1 012 634
- DE-C- 4 323 540
- DE-C- 19 621 913
- DE-U- 29 512 123
- US-A- 5 216 285

## Beschreibung

Die Erfindung betrifft eine Einrichtung zum Überführen von Steuerleitungen zwischen zwei miteinander verbundenen Wagen eines mehrteiligen Zuges. Insbesondere dient die Erfindung der Aufnahme und Führung des Bereiches von Steuerleitungen, der zwischen zwei miteinander verbundenen Wagen eines S-Bahn-Gliederzuges verläuft.

Aus der DE-AS 11 10 205 ist eine Überführung zweier oder mehrerer elektrischer Leitungen zwischen zwei miteinander gekuppelten Fahrzeugen bekannt. Der Leitungsverlauf erfolgt dabei zwischen aufeinanderfolgenden, gekuppelten Wagen im Bereich des Wagendaches über jeweils zwei Stützhalter, die im symmetrischen Abstand von der senkrechten Längsmittenebene der Wagen angeordnet sind. Die Stützhalter nehmen Schutzrohre auf, wobei durch jeweils zwei sich gegenüberliegende Schutzrohre die flexible elektrische Leitung geführt wird. Der zwischen den Enden der Schutzrohre verlaufende und durchhängende Bereich der flexiblen elektrischen Leitungen wird in der Mitte durch eine Schelle zusammengehalten, um bei Kurvenfahrt des Gliederzuges die Leitungsbündel unter geringen Biegebeanspruchungen zu führen.

Der Nachteil dieser Ausführung besteht darin, daß in die offenen Enden der Schutzrohre Feuchtigkeit eintreten kann und darüber hinaus die Isolierung der elektrischen Leitung im Bereich des Eintritts in das Schutzrohr durch die ständige Bewegung des Gliederzuges durchgescheuert werden kann.
Bei der Ausgestaltung eines Koppelverbinders nach der DE 196 14 427 A1 wird einer Teleskopstange eine um sie in mehreren Windungen herumgeführte Leitungsanordnung zur elektrischen Energieübertragung zwischen zwei Wagenkästen eines Schienenfahrzeuges zugeordnet. Bei der praktischen Anwendung des Koppelverbinders zwischen zwei Wagenkästen des Gliederzuges liegt die Längsachse der beiden Wagenkästen weitgehend in einer Flucht mit der Längsachse des Koppelverbinders. Durch Wankbewegung oder bei Kurvenfahrt tritt jedoch eine Abweichung der Flucht der Wagenlängsachsen auf, so daß sich beispielsweise eine Schrägstellung des Koppelverbinders unter gleichzeitiger Strekkung der Teleskopstange und der dazu koaxial angeordneten Leiteranordnung einstellt.

Der Nachteil dieser Ausführung besteht insbesondere in ihrer komplizierten und störanfälligen Konstruktion. Weiterhin begünstigt die Verwendung von auf dem Dachbereich angeordneten Stromleiterschienen, die die Enden des Koppelverbinders gleitend aufnehmen, einen Verschleiß dieser Ausführung.

Die DE 197 05 895 A1 beschreibt ein Schienenfahrzeug aus wenigstens zwei über ein längsmittiges Gelenk gekuppelten Wagen mit an sich gegenüberstehenden Wagenkastenenden im Bereich des Wagendaches vorgesehenen Kabeleinführungen. Die flexiblen, isolierten elektrischen Kabel werden von der Kabeleinführung des einen Wagens über einen diesem Wagen zugeordneten Stützhalter über einen dem zweiten Wagen zugeordneten Stützhalter der Kabeleinführung des zweiten Wagens zugeführt. Die Kabel werden in einem in dem Stützhalter ausgebildeten Schellenblock gebündelt und in diesem fixiert. Durch die zu den Kabeleinführungen beabstandete Anordnung der Schellenblöcke bei gleichzeitiger Anordnung der Schellenblöcke auf einem oberhalb der Kabeleinführungen liegenden Niveau verlaufen die Kabel wellenförmig von einem Wagen zum anderen Wagen, wobei in dem zwischen den Wagenenden gebildeten Raum der Durchhang des Kabelbündels am größten ist. Auf diese Weise können betriebsbedingte begrenzte Abstandsänderungen zwischen den Stützhaltern ausgeglichen werden.

Der Nachteil dieser Ausführungsform besteht darin, daß der relativ große Durchhang des Kabelbündels und die fehlende Unterstützung des Kabelbündels in diesem Bereich ein Quelle von technischen Mängeln sein kann. Darüber hinaus ist eine Trennung der von einem Wagen zum anderen benachbarten Wagen geführten isolierten elektrischen Leitungen kompliziert, da die Kabel durch aufwendige Demontage der Schellenblöcke freigegeben werden müssen.

Der Erfindung liegt die Aufgabe zugrunde, eine Einrichtung zum Überführen von Steuerleitungen zwischen zwei miteinander gekuppelten Fahrzeugen bereitzustellen, bei der ein Durchhang der Steuerleitungen weitgehend vermieden wirdund das Trennen bzw. das Verbinden der Steuerleitungen beim Entkuppeln bzw. beim Kuppeln von Wagen schnell und mit geringem Aufwand vollzogen werden kann.

Erfindungsgemäß wird die Aufgabe durch die Merkmale des Kennzeichens des Patentanspruches 1 gelöst.

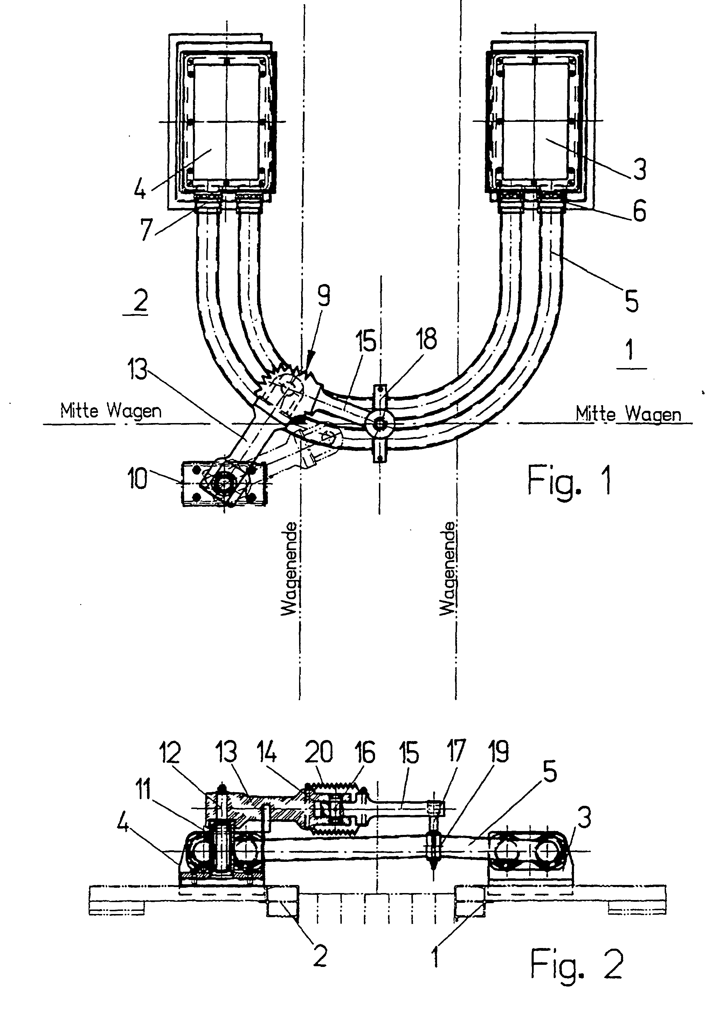

Die Erfindung wird anhand eines Ausführungsbeispiels näher erläutert. Die dazugehörigen Zeichnungen zeigen in
- Fig. 1: eine Draufsicht auf die erfindungsgemäße Einrichtung, die der Abstützung der Steuerleitungen beim Übergang zwischen zwei miteinander gekoppelten Wagen dient;
- Fig. 2: eine Seitenansicht der Einrichtung quer zur Längsachse der gekoppelten Wagen;

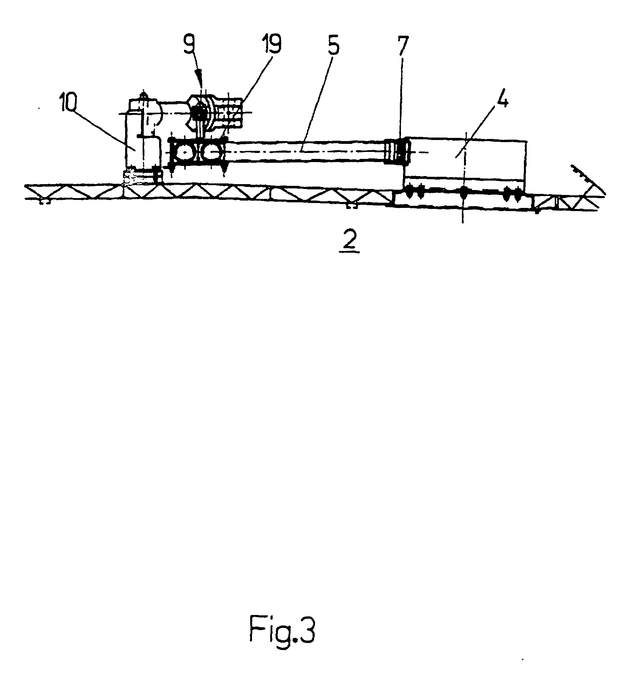

- Fig. 3: eine Seitenansicht der Einrichtung in Richtung der Längsachse der gekoppelten Wagen.

Üblicherweise erfolgt der Übergang von Steuerleitungen und elektrischen Kabeln zwischen zwei miteinander gekoppelten Wagen eines Gliederzuges im Bereich der gegenüberliegenden Wagendachenden. Die miteinander gekoppelten Wagen sind als nicht erfindungswesentlich in den beigefügten Zeichnungen nur bruchstückartig dargestellt und mit den Bezugszeichen 1 und 2 bezeichnet.

Jeder Wagen 1, 2 weist im Bereich des Wagendachendes Leitungseinführungen 3, 4 auf, an die die Steuerleitung 5 feuchtigkeits- und staubdicht mittels geeigneter, nicht näher beschriebener Kupplungselemente 6, 7 angeschlossen wird. Die miteinander korrespondierenden Steuerleitungseinführungen 3, 4 sind auf dem Wagendach in der Weise angeordnet, daß die Steuerleitung 5 von der Steuerleitungseinführung 3 des Wagens 1 zu der Steuerleitungseinführung 4 des Wagens 2 eine in horizontaler Ebene verlaufende Krümmung der Steuerleitung 5 um 180° bewirkt. Zu diesem Zweck sind die Leitungseinführungen 3, 4 von der Wagenmitte beabstandet zur jeweils gleichen Außenseite des Wagens 1, 2 auf dem Wagendach angeordnet. Dabei verläuft die Einführungsachse der Leitungseinführungen 3, 4 im Ausführungsbeispiel horizontal rechtwinklig zur Längsachse der Wagen 1, 2 und die Einführungsrichtung für die anzuschließende Steuerleitung 5 verläuft in gleicher Weise quer zur Längsachse der Wagen 1, 2 in die Leitungseinführungen 3, 4 hinein. Die Einführungsachse und entsprechend die Einführungsrichtung kann, je nach Erfordernissen und Randbedingungen, auch im Winkelbereich zwischen Ausrichtung in Fahrzeuglängsachse und quer zur Fahrzeuglängsachse angeordnet sein, wobei auf ausreichende Steuerleitungslänge zum Ausgleich der Relativ-Bewegungen gegenüberliegender Wagen zu achten ist.

Die Leitungseinführungen 3, 4 können sowohl zur Aufnahme nur einer Steuerleitung 5 als auch eines Bündels von mehreren Steuerleitungen 5 ausgestaltet sein.

Der Abstand der benachbarten Leitungseinführungen 3, 4 untereinander und deren Abstand zur Längsachse der Wagen 1, 2, sowie die Länge der Steuerleitung 5 sind so bemessen, daß der Scheitelpunkt der U-förmig gekrümmten Steuerleitung 5 im wesentlichen in die vertikale Ebene der Längsachse der Wagen 1, 2 in deren Abstandsmitte fällt. Eine derartige ungestützte Überführung der angeschlossenen Steuerleitung 5 verursacht ein Durchhängen des gekrümmten Bereiches der Steuerleitung 5. Um damit verbundene technische Mängel auszuschließen, wird die Steuerleitung 5 durch die erfindungsgemäße Einrichtung am Durchhängen gehindert.

Die das Durchhängen der Steuerleitung 5 vermeidende Einrichtung wird auf dem Wagendach des Wagens 2 angeordnet. Sie besteht aus einem in der horizontalen Ebene oberhalb der Steuerleitung 5 schwenkbaren Gelenkhebel 9, der mit seinem einen Ende am Wagendach um eine vertikale Achse schwenkbar angeordnet ist. Die Schwenkachse ist gegenüberliegend der Leitungseinführung 4 und jenseits der Längsachse des Wagens 2 positioniert. An seinem anderen Ende ist der Gelenkhebel 9 mit Mitteln zur Abfangen der Steuerleitung 5 ausgestattet. Die Länge des Gelenkhebels 9 ist so bemessen, daß das Abfangen der Steuerleitung 5 im Bereich des vorher beschriebenen Scheitelpunktes erfolgt, womit ein Durchhängen der Steuerleitung 5 in diesem Bereich vermieden wird.

Die Lagerung des Gelenkhebels 9 erfolgt mittels eines auf dem Doch des Wagens 2 in der definierten Position verschraubten Lagerbockes 10, der eine Lagerbuchse 11 zur Aufnahme einer darin drehbaren Welle 12 aufweist. Auf dem aus der Lagerbuchse 11 herausragenden Ende der Welle 12 wird der Schwenkorm 13 durch geeignete Elemente verdrehsicher befestigt. Das gegenüberliegende Ende des Schwenkarmes 13 weist eine gabelförmige Ausbildung 14 auf, die der Aufnahme des Hebels 15 dient. Sowohl die gabelförmige Ausbildung 14 des Schwenkarmes 13 als auch das diesseitige Ende der Hebels 15 weisen eine zueinander fluchtende Bohrung auf, durch die ein Bolzen 16 geführt ist. Während der Bolzen 16 in dem zugeordneten Ende des Hebels 15 durch einen Stift fixiert ist, erfolgt die Lagerung des Bolzens 16 in der gabelförmigen Ausbildung 14 des Schwenkarmes 13 drehbar. Der Gelenkhebel 9 ist in diesem Bereich von einem Balg 20 umgeben, der das Gelenk gegen Verschmutzung und Feuchtigkeit und im Winter gegen Vereisung schützt.

Sowohl die Achse der Welle 12 als auch die Achse des Bolzens 16 verlaufen vertikal, was dazu führt, daß das Verschwenken des Gelenkhebels 9 in einer horizontalen Ebene oberhalb der Steuerleitung erfolgt. Das freie Ende des Hebels 15 weist gleichfalls eine Bohrung zur vertikalen und verdrehbaren Aufnahme eines weiteren Bolzens 17 auf. Das aus dem Hebel 15 heraustretende, nach unten gerichtete Ende des Bolzens 17 ist mit einer daran angeschweißten Aufnahmeplatte 18 versehen, an die der Schellenblock 19 angeschraubt ist. Der Schellenblock 19 umfaßt die Steuerleitung 5 bzw. das Bündel von Steuerleitungen 5 im bereits vorher definierten Krümmungsbereich der Steuerleitung 5, womit deren Durchhängen zwischen den Wagen 1 und 2 vermieden wird.

Durch das Abfangen der Steuerleitung 5 in diesem Krümmungsbereich durch die erfindungsgemäße Einrichtung über den Schellenblock 19 erfolgt eine Unterstützung der Steuerleitung 5 in einem Punkt der horizontalen Ebene, der selbst bei Kurvenfahrt des Gliederzuges keine nennenswerte Lageveränderung erfährt. Der Abstand der Leitungseinführungen 3, 4 der gegenüberstehenden Wagenenden, der sich bei Kurvenfahrt des Gliederzuges verringert oder vergrößert, wird in der Steuerleitung 5 durch Veränderung des Krümmungswinkels aufgenommen, während durch den Gelenkhebel 9 der Lage des Punktes, in dem die Steuerleitung 5 unterstützt wird, im wesentlichen beibehalten wird. Damit weist die Überführung von Steuerleitungen zwischen zwei miteinander gekuppelten Fahrzeugen keinerlei Stellen auf, an denen ein Scheuern der Steuerleitung 5 eine Beschädigung derselben verursachen kann.

Ein weiterer wesentlicher Vorteil der Erfindung gegenüber dem bekannten Stand der Technik besteht darin, daß der Aufwand für die Ausstattung der Wagen von Bahnzügen mit Einrichtungen zur Überführung von Leitungen und Kabeln zwischen den Wagen auf ein Minimum reduziert werden kann. Aus der Beschreibung ist ersichtlich, daß jeder Wagen nur an einem Wagenende mit einem Gelenkhebel 9 ausgestattet werden muß.

### Bezugszeichenliste

- 1: Wagen
- 2: Wagen
- 3: Leitungseinführung
- 4: Leitungseinführung
- 5: Steuerleitung
- 6: Kupplungselement
- 7: Kupplungselement
- 9: Gelenkhebel
- 10: Lagerbock
- 11: Lagerbuchse
- 12: Welle
- 13: Schwenkarm
- 14: gabelförmige Ausbildung
- 15: Hebel
- 16: Bolzen
- 17: Bolzen
- 18: Aufnahmeplatte
- 19: Schellenbock
- 20: Balg

## Patentansprüche

1. Einrichtung zum Überführen von Steuerleitungen zwischen zwei miteinander verbundenen Wagen eines mehrteiligen Zuges, insbesondere eines Gliederzuges, die im Dachbereich des Wagenendes Leitungseinführungen für das Ankuppeln dieser Steuerleitungen aufweisen, wobei die Leitungseinführungen (3, 4) im Bereich des Wogendachendes von der Längsachse der Wagen zur gleichen Außenseite der Wagen (1, 2) beabstandet angeordnet sind, wobei die Einführungsachse der Leitungseinführungen (3, 4) im Winkel zur Längsachse der Wagen (1, 2) verläuft, um eine in horizontaler Ebene verlaufende Krümmung der Steuerleitung (5) bei der Überführung von der Leitungseinführung (3) des einen Wagens (1) zur Leitungseinführung (4) des anderen Wagens (2) zu bewirken, **dadurth gekennzeichnet,** daß der Abstand der benachbarten Leitungseinführungen (3, 4) und deren Abstand zur Längsachse der Wagen (1, 2) sowie die Länge der Steuerleitung (5) so bemessen sind, daß der Scheitelpunkt der gekrümmten Steuerleitung (5) im wesentlichen in die vertikale Ebene der Längsachse der Wagen (1, 2) in deren Abstandsmitte fällt und daß ein in horizontaler Ebene schwenkbares, längenveränderliches Element (9) an einem Wagenende der miteinander gekoppelten Wagen (1, 2) vorgesehen ist, welches an seinem freien Ende mit Mitteln zum Abfangen der Steuerleitung (5) in deren durch den Scheitelpunkt definierten Bereich ausgestattet ist.

2. Einrichtung nach Anspruch 1, **dadurch gekennzeichnet, daß** das schwenkbare, längenveränderliche Element als Gelenkhebel (9) ausgebildet ist, welcher in einem auf dem Dach des Wagens (2), gegenüberliegend der Leitungseinführung (4) und jenseits der Längsachse des Wagens (2) positionierten Lagerbock (10) um eine vertikale Achse schwenkbar angeordnet ist.

3. Einrichtung nach Anspruch 2, **dadurch gekennzeichnet, daß** der Lagerbock (10) eine vertikal ausgerichtete Lagerbuchse (11) zur Aufnahme einer darin drehbaren Welle (12) aufweist und auf dem aus der Lagerbuchse (11) herausragenden Ende der Welle (12) ein Schwenkarm (13) verdrehsicher befestigt ist, wobei das gegenüberliegende Ende des Schwenkarmes (13) mit einem um eine vertikale Achse schwenkbaren Gelenk für die Aufnahme eines Hebels (15) ausgestattet ist und das freie Ende des Hebels (15) eine um eine vertikale Achse verdrehbare Aufnahmeplatte (18) zum Abfangen der Steuerleitung (5) aufweist.

4. Einrichtung nach Anspruch 1 oder 2, **dadurch gekennzeichnet, daß** das längenveränderliche Element, insbesondere der Gelenkhebel (9) oberhalb der Steuerleitung (5) schwenkbar ist.

5. Einrichtung nach Anspruch 1 oder 2, **dadurch gekennzeichnet, daß** an jeder Kuppelstelle des Gliederzuges nur an einem Wagenende das längenveränderliche Element, insbesondere der Gelenkhebel (9) angeordnet ist.

6. Einrichtung nach Anspruch 3, **dadurch gekennzeichnet, daß** das zwischen Schwenkarm (13) und Hebel (15) befindliche Gelenk von einem Balg (20) umgeben ist.

7. Einrichtung nach Anspruch 3, **dadurch gekennzeichnet, daß** die Aufnahmeplatte (18) als Träger für einen Schellenblock (19) dient, und der Schellenblock (19) sowohl für die Fixierung einer einzelnen Steuerleitung (5) als auch eines Bündels von Steuerleitungen (5) ausgebildet ist.

8. Einrichtung nach einem oder mehreren der vorhergehenden Ansprüche 1 bis 7, **dadurch gekennzeichnet, daß** die Einführungsachse der Leitungseinführungen (3, 4) horizontal rechtwinklig zur Längsachse der Wagen (1, 2) verläuft, um eine in horizontaler Ebene verlaufende, U-förmige Krümmung der Steuerleitung (5) zu bewirken, wobei der Scheitelpunkt der U-förmig gekrümmten Steuerleitung (5) im wesentlichen in die vertikale Ebene der Längsachse der Wagen (1, 2) in deren Abstandsmitte fällt.

## Claims

1. Device for carrying control lines between two connected coaches of a multiple-unit train, in particular an articulated train, which exhibit line inlets for coupling of these control lines in the area of the roof at the end of the coach, in which the line inlets (3, 4) are arranged in the area of the end of the coach roof a distance from the longitudinal axis of the coaches towards the same outer side of the coaches (1, 2), in which the inlet axis of the line inlets (3, 4) runs at an angle to the longitudinal axis of the coaches (1, 2) in order to make the control line (5) bend in a horizontal plane when it is carried from the line inlet (3) of one coach (1) to the line inlet (4) of the other coach (2), **characterised in that** the distance between the neighbouring line inlets (3, 4) and the distance between them and the longitudinal axis of the coaches (1, 2) and the length of the control line (5) are such that the vertex of the curved control line (5) essentially falls in the vertical plane of the longitudinal axis of the coaches (1, 2) in the middle of the gap between them and **in that** an element (9) which is of variable length and pivotable in a horizontal plane is provided at one end of the coaches of the coupled coaches (1, 2) and at its free end is equipped with means for catching the control line (5) in its area defined by the vertex.

2. Device according to claim 1, **characterised in that** the element which is of variable length and pivotable takes the form of an articulated lever (9) which is arranged so as to be pivotable about a vertical axis in a mounting block (10) positioned on the roof of the coach (2) opposite the line inlet (4) and on the other side of the longitudinal axis of the coach (2).

3. Device according to claim 2, **characterised in that** the mounting block (10) exhibits a vertically aligned bearing bush (11) for reception of a shaft (12) which is pivotable therein, and a pivot arm (13) is fastened so that it cannot turn on the end of the shaft (12) projecting from the bearing bush (11), in which the opposite end of the pivot arm (13) is equipped with a joint which is pivotable about a vertical axis for receiving a lever (15) and the free end of the lever (15) exhibits a receiving plate (18) which is pivotable about a vertical axis to catch the control line (5).

4. Device according to claim 1 or 2, **characterised in that** the element which is of variable length; in particular the articulated lever (9), is pivotable above the control line (5).

5. Device according to claim 1 or 2, **characterised in that** in each coupling location of the articulated train the element which is of variable length, in particular the articulated lever (9), is arranged at only one end of the coach.

6. Device according to claim 3, **characterised in that** the joint located between the pivot arm (13) and the lever (15) is surrounded by a bellows (20).

7. Device according to claim 3, **characterised in that** the receiving plate (18) serves as carrier for a clamping block (19), and the clamping block (19) is designed for fixture of both an individual control line (5) and a bundle of control lines (5).

8. Device according to one or more of the preceding claims 1 to 7, **characterised in that** the inlet axis of the line inlets (3, 4) runs horizontally at right angles to the longitudinal axis of the coaches (1, 2) in order to cause the control line (5) to curve in a U-shape running in a horizontal plane, in which the vertex of the control line (5) curved in a U-shape essentially falls in the vertical plane of the longitudinal axis of the coaches (1, 2) in the middle of the gap between them.

## Revendications

1. Dispositif pour le passage de fils pilotes entre deux wagons, reliés entre eux, d'un train en plusieurs parties, en particulier un train articulé, qui comportent dans la zone du toit de l'extrémité de wagon des entrées de fil pour l'accouplement de ces fils pilotés, étant précisé que les entrées de fil (3, 4) sont disposées dans la zone de l'extrémité du toit de wagon en étant espacées de l'axe longitudinal des wagons, vers le même côté extérieur des wagons (1, 2), et que l'axe d'introduction des entrées de fil (3, 4) définit un angle par rapport à l'axe longitudinal des wagons (1, 2) afin de provoquer une courbure du fil pilote (5) dans le plan horizontal lorsque ce fil pilote (5) passe de l'entrée de fil (3) d'un wagon (1) à l'entrée de fil (4) de l'autre wagon (2), **caractérisé en ce que** l'écartement des entrées de fil voisines (3, 4) et leur écartement par rapport à l'axe longitudinal des wagon (1, 2) ainsi que la longueur du fil pilote (5) sont calculés pour que le sommet de la courbure du fil pilote (5) coïncide sensiblement avec le plan vertical de l'axe longitudinal des wagons (1, 2), au milieu de l'écartement de ceux-ci, et **en ce qu'**il est prévu sur une extrémité des wagons (1, 2) accouplés un élément (9) apte à pivoter dans le plan horizontal et à longueur variable, qui est équipé à son extrémité libre de moyens pour recevoir le fil pilote (5) dans leur zone définie par le sommet.

2. Dispositif selon la revendication 1, **caractérisé en ce que** l'élément pivotant et à longueur variable est conçu comme un levier articulé (9) qui est disposé, pivotant autour d'un axe vertical, dans un palier (10) placé sur le toit du wagon (2), en face de l'entrée de fil (4) et au-delà de l'axe longitudinal du wagon (2).

3. Dispositif selon la revendication 2, **caractérisé en ce que** le palier (10) comporte un coussinet (11) orienté à la verticale, pour recevoir un axe (12) apte à tourner dedans, et un bras pivotant (13) est fixé, fixe en rotation, sur l'extrémité de l'axe (12) qui dépasse du coussinet (11), l'extrémité opposée du bras pivotant (13) étant équipée d'une articulation apte à pivoter autour d'un axe vertical et destinée à recevoir un levier (15), et l'extrémité libre du levier (15) présentant une plaque de réception (18) apte à pivoter autour d'un axe vertical et destinée à recevoir le fil pilote (5).

4. Dispositif selon la revendication 1 ou 2, **caractérisé en ce que** l'élément à longueur variable, en particulier le levier articulé (9), est apte à pivoter au-dessus du fil pilote (5).

5. Dispositif selon la revendication 1 ou 2, **caractérisé en ce qu'**à chaque point d'accouplement du train articulé, l'élément à longueur variable, en particulier le levier articulé (9), n'est disposé que sur une extrémité de wagon.

6. Dispositif selon la revendication 3, **caractérisé en ce que** l'articulation disposée entre le bras pivotant (13) et le levier (15) est entourée par un soufflet (20).

7. Dispositif selon la revendication 3, **caractérisé en ce que** la plaque de réception (18) sert de support pour un bloc de serrage (19) et ce bloc de serrage (19) est conçu pour fixer aussi bien un fil pilote (5) individuel qu'un faisceau de fils pilotes (5).

8. Dispositif selon l'une au moins des revendications précédentes 1 à 7, **caractérisé en ce que** l'axe d'introduction des entrées de fil (3, 4) est à angle droit, horizontalement, par rapport à l'axe longitudinal des wagons (1, 2) afin de former une courbure en U, dans le plan horizontal, du fil pilote (5), le sommet de la courbure en U coincidant sensiblement avec le plan vertical de l'axe longitudinal des wagons (1, 2), au milieu de l'écartement de ceux-ci.
